# EUROPÄISCHE PATENTSCHRIFT

(11) **EP 1 139 277 B1**
(45) Veröffentlichungstag und Bekanntmachung des Hinweises auf die Patenterteilung: **20.02.2008**
(21) Anmeldenummer: 01107560.3
(22) Anmeldetag: 27.03.2001
(51) Int. Cl.: G06K 17/00

(54) **Scannerstation**
Scanning station
Station de balayage

(30) Priorität: 30.03.2000 DE 10015551
(43) Veröffentlichungstag der Anmeldung: 04.10.2001
(73) Patentinhaber: Feig Electronic Gesellschaft mit beschränkter Haftung, 35781 Weilburg-Waldhausen (DE)
(72) Erfinder: Feig, Wolfgang, Dipl.-Ing., 35781 Weiburg-Waldhausen (DE)
(74) Vertreter: Knefel, Cordula

(56) Entgegenhaltungen:
- DE-A- 19 856 763
- GB-A- 2 274 373
- US-A- 5 883 582
- US-A- 6 023 610
- PATENT ABSTRACTS OF JAPAN vol. 1999, no. 12, 29. Oktober 1999 (1999-10-29) & JP 11 180513 A (INABA ENGINEERING KK), 6. Juli 1999 (1999-07-06)

## Beschreibung

Die auf einer Palette oder in einem Container aufgestapelten Güter oder Waren sollen identifiziert werden, wobei die an den Gütern oder Waren befestigten Identifikationsmittel durch die Umverpackung, zum Beispiel den Warencontainer oder benachbarte Waren und Güter verdeckt werden können, Auf einer Palette oder in dem Container, der aus einem elektromagnetisch durchlässigen Material bestehen muss, können dabei praktisch beliebig viele einzelne Güter aufgestapelt sein. Sinn der vorgeschlagenen Anordnung ist es, die einzelnen Güter zum Beispiel am Warenausgang oder Wareneingang zu identifizieren und zu registrieren um damit den Warenfluss zu kontrollieren und zu steuern.

Als Identifikationsmittel werden passive Transponder eingesetzt, die eine feste unveränderbare Seriennummer tragen und weiterhin über einen Schreib-/Lesespeicher verfügen, deren Speicherinhalt auf elektromagnetischem Weg berührungslos ausgelesen und verändert werden kann. Von diesen Transpondern wird jeweils mindestens einer an den zu identifizierenden Gütern beziehungsweise Waren fixiert.

Die derzeitigen im Bereich der Warenflusskontrolle eingesetzten Identifikationsmittel basieren in der Regel auf einer optischen Abtastung eines kodierten Etiketts, das entweder auf die Waren aufgeklebt ist oder bereits in die Oberfläche der Waren oder der die Waren umgebenden Verpackung eingelassen ist. Der entscheidende Nachteil dieser Lösungen ist jedoch, dass das Identifikationsmittel zwangsläufig auf der Außenseite der Ware angeordnet sein muss und beim Aufstapeln der Waren darauf geachtet werden muss, dass die Identifikationsmittel sichtbar bleiben.

Dieser Umstand verhindert zum Beispiel, dass die aufgestapelten Waren durch eine undurchsichtige Umverpackung umhüllt werden dürfen, woraus resultiert, dass in der Praxis nur durchsichtige Kunststofffolien eingesetzt werden können. Zudem versagen diese Verfahren, wenn die aufgestapelten Waren in ihren Abmessungen so klein sind, dass im gestapelten Zustand Innenlagen entstehen, die durch die optische Abtasteinrichtung nicht erreicht werden können.

Gemäß dem Stand der Technik (JP 11180513 A) ist eine Vorrichtung bekannt, mit der Gegenstände, die auf Regalböden stehen, identifiziert werden können. Bei dieser zum Stand der Technik gehörenden Vorrichtung werden so viele Antennen vorgesehen wie Regalböden vorhanden sind. Die Gegenstände sind auf den einzelnen Regalböden separiert, damit diese identifiziert werden können.

Bei anderen bereits bekannten Lösungen werden Waren mit Transpondern versehen und zum Beispiel horizontal auf einem Transportband an einer oder mehreren Transponderleseeinrichtungen vorbeigeführt, die neben, über oder unter dem Transportband angeordnet sind. Da jedoch durch das Transportband und insbesondere durch die in der Regel metallische Tragkonstruktion des Transportbandes ein Teil der zur Kommunikation mit dem Transponder benötigten elektromagnetischen Energie absorbiert wird, und die maximale Antennenfläche einer Transponderleseeinrichtung aufgrund physikalischer Gegebenheiten eingeschränkt wird, und zudem aufgrund bestehender rechtlicher Regelungen jede Transponderleseeinrichtung nur mit einer limitierten, maximal zulässigen Sendeleitung arbeiten darf, eignen sich diese Lösungen nur eingeschränkt zur schnellen Identifikation großer Warengebinde

Die erfindungsgemäße Scannerstation zum berührungslosen Lesen und Schreiben von Transpondern in Warenstapeln, bei der mindestens eine Schreib-/Leseantenne an der Außenseite des Warenstapels vorgesehen ist, und diese mindestens eine Schreib-/Leseantenne den Warenstapel in vertikaler Richtung abtastet, zeichnet sich dadurch aus, dass mindestens eine aktive Schreib-/Leseantenne und mindestens eine passive Leseantenne vorgesehen ist, und dass die mindestens eine aktive Schreib-/Leseantenne und die mindestens eine passive Leseantenne in vertikaler Richtung an dem Warenstapel vorbeiführbar ist.

Bei der vorgeschlagenen Lösung handelt es sich um eine Scannerstation, bei der eine mit einer Schreib-/Leseeinheit verbundene Schreib-/Leseantenne, die ein elektromagnetisches Wechselfeld aussendet, über welches die elektrische Energie zu den an den Waren fixierten Transpondern übertragen wird und das zudem als Trägerfrequenz für die Datenkommunikation zwischen Transponder und Schreib-/Lesegerät dient, an den zu identifizierenden Gütern vorbeigeführt wird, um dabei schichtweise alle im Erfassungsbereich befindlichen Transponder zu identifizieren und Daten mit diesen auszutauschen.

Gemäß der Erfindung besteht die Schreib-/Leseantenne aus mindestens zwei diskreten Antennen, wobei mindestens eine aktive Schreib-/Leseantenne und mindestens eine passive Leseantenne vorgesehen sind. Durch eine derartige Anordnung wird es möglich, dass die an den Waren oder Gütern fixierten Transponder in räumlich nahezu beliebiger Lage angeordnet sein können und dennoch mit den Schreib-/Leseantennen sicher kommunizieren können.

Hierbei zeichnet sich die mindestens eine aktive Schreib-/Leseantenne dadurch aus, dass diese sowohl mit einer Sendeeinheit als auch mit einer Empfangseinheit der Schreib-/Leseeinheit verbunden ist, während die mindestens eine passive Leseantenne nur mit einer Empfangseinheit der Schreib-/Lesestation in Verbindung steht und somit lediglich die von der aktiven Schreib-/Leseantenne gesendeten Signale und die Signale der im Warenstapel befindlichen Transponder zur Schreib-/Leseeinheit übermittelt.

Vorzugsweise ist die Schreib-/Leseantenne dabei so ausgelegt, dass sie die auf einer Palette oder in einem Container aufgestapelten Waren ringförmig umschließt und in ihrer Größe und Form an die Außenabmessungen der Palette oder des Containers angepasst ist. Hierdurch wird erreicht, dass die von der Schreib-/Leseantenne abgestrahlte elektromagnetische Energie optimal auf die Transponder einwirken kann und somit von der Schreib-/Leseeinheit nur so viel elektromagnetische Energie abgegeben werden muss, wie tatsächlich notwendig ist.

Das Vorbeiführen der die aufgestapelten Waren umschließenden Schreib-/Leseantenne, das in der vertikalen Richtung erfolgt, bietet für den vorgesehenen Anwendungsfall besonders positive Eigenschaften bezüglich der Erfassungssicherheit der an den Waren fixierten Transponder.

Hervorzuheben ist, dass die Anzahl der aufgestapelten Schichten, also die maximale Stapelhöhe und damit analog die Anzahl der aufgestapelten Waren praktisch keinen Einfluss auf die Erfassungssicherheit und die Anwendung des Verfahrens hat. Somit eignet sich die vorgeschlagene Lösung besonders für große Warenmengen bei der 100 und mehr Wareneinheiten auf einer Palette aufgestapelt sind.

Die Anordnung einer automatischen Antennenabgleicheinheit direkt an der Schreib-/Leseantenne ist besonders vorteilhaft zur Abstimmung der Resonanzfrequenz der Schreib-/Leseantenne, insbesondere dann, wenn die Resonanzfrequenz aufgrund des Einflusses der aufgestapelten Waren oder der Vielzahl der gleichzeitig zu identifizierenden Transponder innerhalb einer Lage variiert.

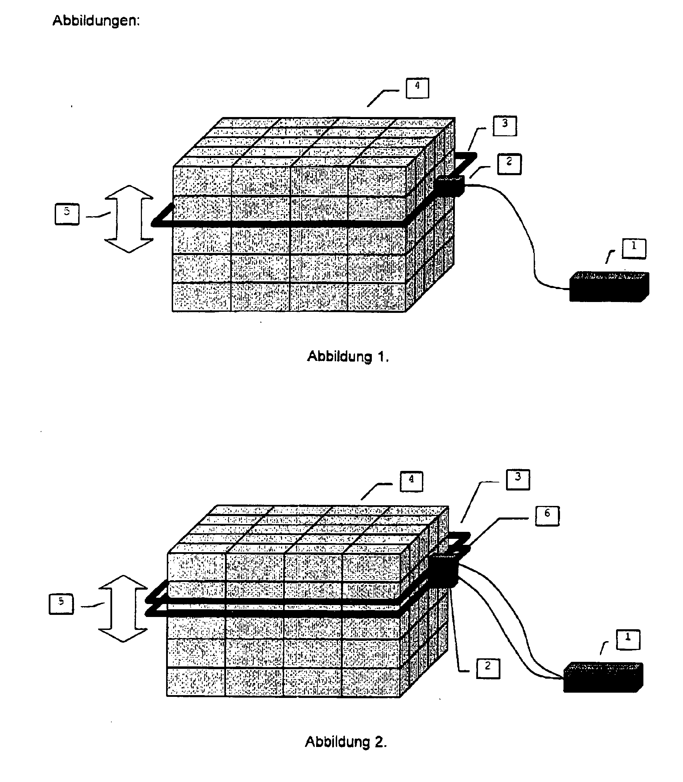

Eine derartige Anordnung ist in Abbildung 1 dargestellt, die vom Anspruch 1 jedoch nicht umfasst ist. Hierbei wird der Warenstapel (4) durch mindestens eine Schreib-/Leseantenne (3) umschlossen, die bevorzugt in vertikaler Richtung (5) an dem Warenstapel (4) vorbeigeführt wird, um mit den im Warenstapel (4) befindlichen, nicht explizit dargestellten Transpondern in Kommunikation zu treten. Die automatische Antennenabgleicheinheit (2) ist hierbei in unmittelbarer Nähe der Schreib-/Leseantenne (3) angeordnet und kann selbständig auf die Abstimmung der Schreib-/Leseantenne Einfluss nehmen.

In einer weiteren Ausführungsform kommuniziert die automatische Antennenabgleicheinheit (2) mit der Schreib-/Leseeinheit (1), um Zustandsdaten über die Antennenabstimmung an die Schreib-/Leseeinheit (1) zu übermitteln und Befehle von der Schreib-/Leseeinheit (1) umzusetzen.

Eine weitere Verbesserung der Erfassungsrate lässt sich bei der vorgeschlagenen Lösung dadurch erzielen, dass der im Transponder angeordnete Antennenschwingkreis nicht, wie sonst üblich, exakt auf die Frequenz abgestimmt wird mit der die Schreib-/Leseeinheit das elektromagnetische Wechselfeld in die Schreib-/Leseantenne treibt, sondern gezielt verstimmt wird. Durch diese Verstimmung kann die gegenseitige Beeinflussung der Transponder untereinander, insbesondere wenn diese dicht neben- oder übereinander angeordnet sind, fast vollständig ausgeglichen werden.

In einer weiteren vorteilhaften Ausführungsform kann die Schreib-/Leseantenne auch aus mindestens zwei diskreten Antennen bestehen, wie dies in Abbildung 2 dargestellt ist, wobei Ausführungen mit mindestens einer aktiven Schreib-/Leseantenne (3) und mindestens einer passiven Leseantenne (6) besonders vorteilhaft sein können. Durch eine derartige Anordnung wird es möglich, dass die an den Waren oder Gütern fixierten Transponder in räumlich nahezu beliebiger Lage angeordnet sein können und dennoch mit den Schreib-/Leseantennen sicher kommunizieren können.

Hierbei zeichnet sich die mindestens eine aktive Schreib-/Leseantenne (3) dadurch aus, dass diese sowohl mit einer Sendeeinheit, als auch mit einer Empfangseinheit der Schreib-/Leseeinheit (1) verbunden ist, während die mindestens eine passive Leseantenne (6) nur mit einer Empfangseinheit der Schreib-/Lesestation in Verbindung steht und somit lediglich die von der aktiven Schreib-/Leseantenne gesendeten Signale und die Signale der im Warenstapel befindlichen Transponder zur Schreib-/Leseeinheit übermittelt.

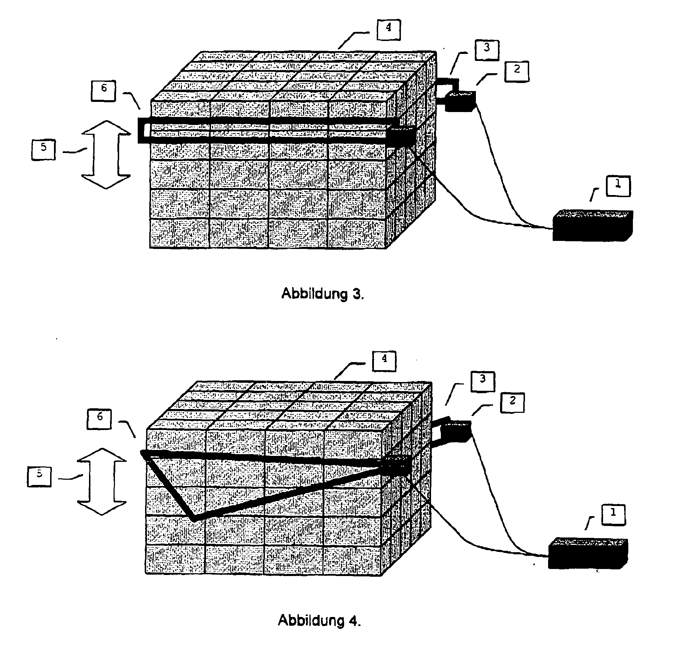

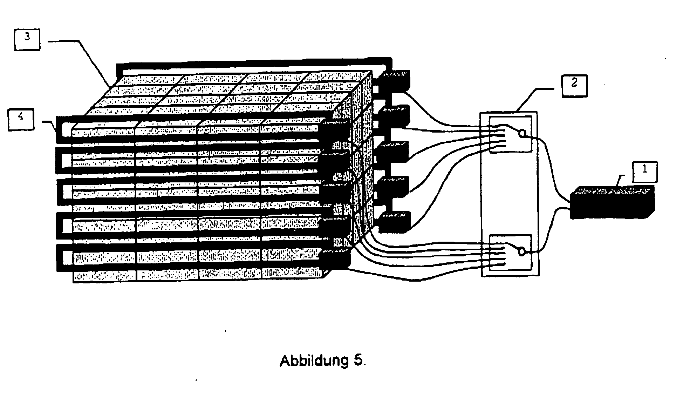

In einer weiteren vorteilhaften Ausführungsform wird die erfindungsgemäße Scannerstation gemäß Abbildung 3 aus zwei zum Warenstapel flächenparallel angeordneten Antennen ausgebildet. In dieser Ausführungsform ist eine der mindestens zwei Antennen, als aktive Schreib-/Leseantenne (3) ausgeführt, während die zweite Antenne als passive Leseantenne (6) ausgebildet ist.

Vorteil der flächenparallel angeordneten Antennen gegenüber der vorgenannten Lösung mit mindestens einer ringförmigen Schreib-/Leseantenne ist, dass die Antenne nicht zuerst an der Oberseite des Warenstapels über den Warenstapel geführt werden muss, bevor sie den Warenstapel in vertikaler Richtung abtasten kann, sondern auf einfache Art und Weise horizontal seitlich am Warenstapel vorbeigeführt wird, um diesen anschließend in vertikaler Richtung abzutasten und am Ende des Scanvorgangs wieder horizontal vom Warenstapel entfernt wird.

Eine weitere Verbesserung der Erfassungsrate kann durch eine weitere Ausführungsform der mindestens einen aktiven Schreib-/Leseantenne oder der mindestens einen passiven Leseantenne dadurch erzielt werden, dass diese, anders als in Abbildung 2 und 3 dargestellt nicht vollständig horizontal ausgerichtet ist, sondern mindestens eine Ebene in diagonaler Ausrichtung besitzt. Eine solche Anordnung ist in Abbildung 4 dargestellt. Die Diagonale kann hierbei durch Schreib-/Leseantennen in Form von einer Raute, einem Dreieck oder der besonders vorteilhaften Form einer Acht oder anderen vorteilhaften geometrischen Formen erzeugt werden. Durch die diagonale Anordnung der mindestens einen Schreib-/Leseantenne (3) wird das elektromagnetische Wechselfeld, welches diese umgibt, so gelenkt, dass dieses jeden in beliebiger Ortslage befindlichen Transponder innerhalb des Warenstapels so weit erfasst und durchdringt, dass die Kommunikation zwischen der mindestens einen Schreib-/Leseantenne (3) oder der mindestens einen Leseantenne (6) und jedem Transponder innerhalb des Warenstapels erfolgen kann.

Auch bei diesen wie bei sämtlichen vorgenannten Ausführungsformen ist die Anordnung einer direkt an der jeweiligen aktiven Schreib-/Leseantenne (3) und/oder passiven Leseantenne (6) angeordneten automatischen Abgleicheinheit (2) vorteilhaft.

Durch eine schnelle Detektion des Bereichs, in dem sich mindestens ein Transponder befinden kann wird der gesamte Scanvorgang entscheidend beschleunigt, und es wird eine flexible Anpassung an unterschiedliche Stapelhöhen der aufgestapelten Waren erzielt, da die Schreib-/Leseantenne bis zum Beginn des Warenstapels mit hoher Geschwindigkeit bewegt werden kann und erst ab diesem Punkt mit einer dem Datenumfang angepassten Geschwindigkeit weiterbewegt werden muss. Dazu verfügt die Scannerstation über eine Steuereinheit, über die die Bewegungsgeschwindigkeit der Schreib-/Leseantenne geregelt werden kann.

Zur Detektion, ob sich im Erfassungsbereich der Schreib-/Leseantenne mindestens ein Transponder befinden kann, können unterschiedliche Verfahrensweisen, jeweils für sich alleinstehend oder in Kombination angewendet werden.

Zur Detektion geeignet ist das Messen der Rückwirkung der im Antennenfeld befindlichen Transponder auf die Resonanzfrequenz der Schreib- / Leseantenne, Diese Rückwirkung kann durch die Schreib-/Leseeinheit selbst oder vorzugsweise durch die an der Schreib-/Leseantenne angeordnete automatische Antennenabgleicheinheit detektiert und an die Schreib-/Leseeinheit signalisiert werden.

In einer weiteren Ausführungsform sendet die Schreib-/Leseeinheit ein Kommando über die Schreib- / Leseantenne an die vermeintlich im Erfassungsbereich befindlichen Transponder, auf welches jeder im Erfassungsbereich befindliche Transponder antworten kann, um der Schreib-/Leseeinheit sein Vorhandensein zu signalisieren.

Die Detektion des Warenstapels kann auch ergänzend oder als alleiniges Mittel durch eine unmittelbar unterhalb der bewegten Schreib-/Leseantenne angeordnete optische Abtasteinheit, beispielsweise in Form einer Lichtschranke erfolgen. Sobald die Abtasteinheit einen Gegenstand detektiert, signalisiert sie diesen Zustand an die Schreib-/Leseeinheit, damit diese mit der Transponderabfrage beginnen kann.

## Patentansprüche

1. Scannerstation zum berührungslosen Lesen und Schreiben von Transpondern in Warenstapeln (4), wobei mindestens eine Schreib-/Leseantenne (3) an der Außenseite des Warenstapels (4) vorgesehen ist und diese mindestens eine Schreib-/Leseantenne (3) den Warenstapel (4) in vertikaler Richtung abtastet, **dadurch gekennzeichnet, dass** mindestens eine aktive Schreib-/Leseantenne (3) und mindestens eine passive Leseantenne (6) vorgesehen ist, und dass die mindestens eine aktive Schreib-/Leseantenne (3) und die mindestens eine passive Leseantenne (6) in vertikaler Richtung an dem Warenstapel (4) vorbeiführbar sind.

2. Scannerstation nach Anspruch 1, **dadurch gekennzeichnet, dass** die mindestens eine aktive Schreib-/Leseantenne (3) oder die mindestens eine passive Leseantenne (6) den Warenstapel(4) ringförmig umschließt.

3. Scannerstation nach einem der Ansprüche 1 bis 2, **dadurch gekennzeichnet, dass** die mindestens eine aktive Schreib-/Leseantenne (3) oder die mindestens eine passive Leseantenne (6) flächenparallel senkrecht neben dem Warenstapel (4) angeordnet ist.

4. Scannerstation nach einem der Ansprüche 1 bis 3, **dadurch gekennzeichnet, dass** die mindestens eine aktive Schreib-/Leseantenne (3) oder die mindestens eine passive Leseantenne (6) mindestens eine diagonale Strecke aufweist, die in einem Winkel zwischen 0° und 90° aus der Horizontalen abweicht.

5. Scannerstation nach einem der Ansprüche 1 bis 4, **dadurch gekennzeichnet, dass** die mindestens eine aktive Schreib-/Leseantenne (3) und/oder die mindestens eine passive Leseantenne (6) mit einer automatischen Antennenabgleicheinheit (2) ausgerüstet ist, die unmittelbar an der Schreib-/Leseantenne (3) angeordnet ist und Veränderungen des Antennenabgleichs selbstständig ausregelt oder an die Schreib-/Lesestation (1) signalisiert oder von einer Schreib-/Lesestation abfragbar und steuerbar ist.

6. Scannerstation nach einem der Ansprüche 1 oder 3 bis 5, **dadurch gekennzeichnet, dass** eine in die Schreib-/Lesestation (1) integrierte Steuereinrichtung die Bewegungsgeschwindigkeit der mindestens einen Schreib-/Leseantenne (3) regelt.

7. Scannerstation nach einem der Ansprüche 1 oder 3 bis 6, **dadurch gekennzeichnet, dass** der Beginn des Warenstapels (4) durch Messen der Verstimmung der mindestens einen Schreib-/Leseantenne (3) detektierbar ist.

8. Scannerstation nach einem der Ansprüche 1 oder 3 bis 7, **dadurch gekennzeichnet, dass** der Beginn des Warenstapels (4) durch ein Kommando über die mindestens eine aktive Schreib-/Leseantenne (3) von der Sende-/Empfangseinheit an alle vermeintlich im Erfassungsbereich befindlichen Transponder gesendet wird, woraufhin jeder Transponder seinerseits ein Antwortsignal aussendet, um sein Vorhandensein zu signalisieren.

9. Scannerstation nach einem der Ansprüche 1 oder 3. bis 8, **dadurch gekennzeichnet, dass** eine direkt unterhalb der Antenne (3) angeordnete Lichtschranke den Beginn des Warenstapels (4) detektiert.

10. Scannerstation nach allen vorhergehenden Ansprüchen, **dadurch gekennzeichnet, dass** die im Warenstapel(4) befindlichen Transponder nicht exakt auf die Resonanzfrequenz der erfindungsgemäßen Scannerstation abgestimmt sind.

## Claims

1. A scanning station for the contactless reading and writing of transponders in stacks of goods (4), wherein at least one write/read antenna (3) is provided on the outside of the stack of goods (4) and this at least one write/read antenna (3) scans the stack of goods (4) in a vertical direction, **characterised in that** at least one active write/read antenna (3) and at least one passive reading antenna (6) is provided, and **in that** the at least one active write/read antenna (3) and the at least one passive reading antenna (6) are movable past the stack of goods (4) in a vertical direction.

2. A scanning station according to claim 1, **characterised in that** the at least one active write/read antenna (3) or the at least one passive reading antenna (6) surrounds the stack of goods (4) in an annular manner.

3. A scanning station according to either one of claims 1 to 2, **characterised in that** the at least one active write/read antenna (3) or the at least one passive reading antenna (6) is arranged vertically next to the stack of goods (4) so as to be parallel with the surface thereof.

4. A scanning station according to any one of claims 1 to 3, **characterised in that** the at least one active write/read antenna (3) or the at least one passive reading antenna (6) has at least one diagonal portion which deviates from the horizontal at an angle between 0° and 90°.

5. A scanning station according to any one of claims 1 to 4, **characterised in that** the at least one active write/read antenna (3) or the at least one passive reading antenna (6) is provided with an automatic antenna tuning unit (2) which is arranged directly on the write/read antenna (3) and independently corrects changes in the tuning of the antenna or signals them to the write/read station (1) or which can be interrogated and controlled by a write/read station.

6. A scanning station according to any one of claims 1 or 3 to 5, **characterised in that** a control device integrated into the write/read station (1) controls the rate of movement of the at least one write/read antenna (3).

7. A scanning station according to any one of claims 1 or 3 to 6, **characterised in that** the start of the stack of goods (4) is detectable by measuring the detuning of the at least one write/read antenna (3).

8. A scanning station according to any one of claims 1 or 3 to 7, **characterised in that** the start of the stack of goods (4) is transmitted by the transmitting/receiving unit by a command via the at least one active write/read antenna (3) to all transponders believed to be located within the detection range, whereupon each transponder for its part emits a response signal in order to signal its presence.

9. A scanning station according to any one of claims 1 or 3 to 8, **characterised in that** a light barrier arranged directly underneath the antenna (3) detects the start of the stack of goods (4).

10. A scanning station according to all preceding claims, **characterised in that** the transponders located in the stack of goods (4) are not precisely tuned to the resonance frequency of the scanning station according to the invention.

## Revendications

1. Station de balayage destinée à une lecture et une écriture sans contact de répondeurs dans des empilements de marchandises (4), où au moins une antenne d'écriture/de lecture (3) est prévue sur le côté extérieur de l'empilement de marchandises (4) et la au moins une antenne d'écriture/de lecture (3) effectue un balayage de l'empilement de marchandises (4) dans la direction verticale, **caractérisée en ce que** la au moins une antenne d'écriture/de lecture active (3) et au moins une antenne de lecture passive (6) sont prévues, et **en ce que** la au moins une antenne d'écriture/de lecture active (3) et la au moins une antenne de lecture passive (6) peuvent être orientées vers l'avant dans une direction verticale sur l'empilement de marchandises (4).

2. Station de balayage selon la revendication 1,
**caractérisé en ce que** la au moins une antenne de lecture/d'écriture active (3) ou la au moins une antenne de lecture passive (6) entoure l'empilement de marchandises (4) suivant une forme annulaire.

3. Station de balayage selon l'une des revendications 1 à 2, **caractérisée en ce que** la au moins une antenne d'écriture/de lecture active (3) ou la au moins une antenne de lecture passive (6) est disposée parallèlement aux surfaces, et perpendiculairement à proximité de l'empilement de marchandises (4).

4. Station de balayage selon l'une des revendications 1 à 3, **caractérisée en ce que** la au moins une antenne de d'écriture/de lecture active (3) ou la au moins une antenne de lecture passive (6) présente au moins une droite en diagonale, qui s'écarte de l'horizontale d'un angle entre 0° et 90°.

5. Station de balayage selon l'une des revendications 1 à 4, **caractérisée en ce que** la au moins une antenne d'écriture/de lecture active (3) et/ou la au moins une antenne de lecture passive (6) est équipée d'une unité de syntonisation d'antenne automatique (2), qui est agencée directement sur l'antenne d'écriture/de lecture (3) et des modifications de la syntonisation d'antenne sont réglées indépendamment ou bien signalées à la station d'écriture/de lecture (1) ou peuvent être interrogées et commandées à partir d'une station d'écriture/de lecture.

6. Station de balayage selon l'une quelconque des revendications 1 ou 3 à 5, **caractérisée en ce qu'**un dispositif de commande intégré dans la station d'écriture/de lecture (1) règle la vitesse de déplacement d'au moins une antenne d'écriture/de lecture (3).

7. Station de balayage selon l'une des revendications 1 ou 3 à 6, **caractérisée en ce que** le début de l'empilement de marchandises (4) peut être détecté par une mesure de l'absence d'accord de la au moins une antenne d'écriture/de lecture (3).

8. Station de balayage selon l'une des revendications 1 ou 3 à 7, **caractérisé en ce que** le début de l'empilement de marchandises (4) sera émis par une commande à destination de la au moins une antenne d'écriture/de lecture active (3) depuis l'unité d'émission/réception vers tous les répondeurs qui sont supposés se trouver dans une zone de détection, où chaque répondeur émet de son côté un signal de réponse, pour signaliser sa présence.

9. Station de balayage selon l'une des revendications 1 ou 3 à 8, **caractérisé en ce que** une cellule de détection disposée directement en dessous de l'antenne (3) détecte le début de l'empilement de marchandises (4).

10. Station de balayage selon toutes les revendications précédentes, **caractérisé en ce que** les répondeurs qui se situent dans l'empilement de marchandises (4) ne sont pas accordés exactement à la fréquence de résonance de la station de balayage conforme à l'invention.
